Europäisches Patentamt

European Patent Office

Office européen des brevets

(19)

(11) **EP 0 938 985 A1**

(12) **EUROPEAN PATENT APPLICATION**

(43) Date of publication:
01.09.1999 Bulletin 1999/35

(51) Int. Cl.⁶: **B60C 15/04**

(21) Application number: 98200611.6

(22) Date of filing: 26.02.1998

(84) Designated Contracting States:
AT BE CH DE DK ES FI FR GB GR IE IT LI LU MC
NL PT SE
Designated Extension States:
AL LT LV MK RO SI

(71) Applicant: N.V. BEKAERT S.A.
8550 Zwevegem (BE)

(72) Inventors:
• D'Haene, Urbain
8570 Ingooigem (BE)
• Poethke, Horst
8520 Kuurne (BE)

(74) Representative:
Messely, Marc, Ir. et al
N.V. Bekaert S.A.,
Bekaertstraat 2
8550 Zwevegem (BE)

(54) **Light-weight bead assembly with high-strength steel filaments**

(57) A composite bead assembly (10) comprises a number of windings of a single elongated element (12). This element (12) comprises a steel core (14) and a coating of matrix material (16) around said core. The core comprises one or more steel filaments. The steel filaments have a diameter d ranging from 0.10 mm to 0.60 mm and having a tensile strength more than 4000 - 2000 x d MPa, wherein d is the diameter expressed in mm. The bead assembly has a considerably reduced weight in comparison with existing bead assemblies with steel elements.

Fig. 1

Printed by Xerox (UK) Business Services
2.16.7/3.6

## Description

### Field of the invention.

The present invention relates to a composite bead assembly comprising a number of windings of a single elongated element.

### Background of the invention.

Bead assemblies or bead structures are generally known in the art and are present in the majority of rubber tires. Their function is to anchor the tire on the rim and to secure the transfer of forces and moments between the tire and the rim.

Bead assemblies comprising a number of windings of a single elongated element are also known : a single elongated element forms several windings, one winding adjacent to another winding until a first layer is formed ; thereafter the same single elongated element forms in several windings a second layer above the first layer, and so on. Such a bead assembly can be designated as a 1xn bead assembly, where n refers to the number of windings. Other bead assemblies are formed by more than one elongated element. One elongated element forms a first layer in several windings.

The second layer is formed by the windings of a second elongated element, and so on. Such a bead assembly can be designated as a nxm bead assembly, where m refers to the number of layers and n to the number of windings in one layer.

In a world-wide trend to continuously reduce consumption of fuels of vehicles, numerous measures have been taken to reduce the weight of the vehicles. The tires of the vehicles did not escape from this trend. In the beginning the efforts were focused on the breaker and carcass plies.

In a second stage, however, the bead area was also scrutinized. With respect to the weight reduction in the bead area, the ultimate target seems to have been reached by a bead assembly where the strength members are formed by high-tensile synthetic filaments or synthetic cords such as aramid. A bead assembly comprising aramid filaments is mentioned in EP-A-0 416 638. A bead assembly comprising aramid cords is mentioned in DE 197 06 262. A part from the problem of creep experienced with aramid strength members, all bead assemblies with aramid strength elements have the major drawback of being very expensive : they cost up to seven and more times the price of a conventional bead assembly with strength members in steel.

### Summary of the invention.

It is an object of the present invention to provide a bead assembly which realizes a considerable weight reduction without multiplying a number of times the price of a convenient bead assembly.

According to the invention there is provided a composite bead assembly comprising a number of windings of a single elongated element. This single elongated element comprises a steel core and a coating of matrix material around the steel core. This matrix material around the steel core is softer than the steel core and, as a consequence, helps to distribute the tensions uniformly over the steel cores and avoids the use of mechanical clamps to hold the windings together. The steel core comprises one or more steel filaments. The steel filaments have a diameter d ranging from 0.10 mm to 0.60 mm, e.g. from 0.10 mm to 0.30 mm. These are diameters which are convenient for reinforcement of the breaker plies and, at least for the lower half between 0.10 mm and 0.30 mm, for the reinforcement of carcass plies of a rubber tire, but which are not convenient for the reinforcement of the bead area. The steel filaments of the invention have a tensile strength more than

$$4000 - 2000 \times d \text{ (MPa)} \tag{1}$$

wherein 1 MPa = 1 MegaPascal = 1 $N/mm^2$ and wherein d is the diameter of the steel filament expressed in mm.

A steel filament having a tensile strength above the level expressed in formula (1) is hereinafter referred to as an "ultra high-tensile" steel filament.

The individual steel filaments may be subjected to a stress-relieving treatment carried out in such a way that an increased elongation at break is obtained or may be not subjected to such a stress-relieving treatment. Within the context of the present invention, preference is given to steel filaments which are not subjected to a stress-relieving treatment, since the stress-relieving treatment considerably reduces the tensile strength and it would become difficult to obtain with stress-relieved ultra high-tensile strengths as expressed by the level of formula (1).

With respect to the steel core, two embodiments are possible.

In a first embodiment the steel core is a bundle of steel filaments, i.e. two or more individual steel filaments in parallel adjacent to each other. The number of windings depends upon the number of filaments in the bundle and upon the diameter of the filaments. The greater the number of filaments and the greater the diameter of the filaments, the smaller the number of windings. In any case, the number of windings exceeds 3.

In a second embodiment the steel core is a single steel filament. In order to obtain the required breaking load, the number of windings is greater than 3, but very often exceeds 100 and in some embodiments even 200.

With respect to the matrix material of the coating around the steel core, this can be a rubber, a synthetic rubber or a natural rubber or a high polymer. A high polymer is herein defined as an organic macromolecule composed of a large number of monomers so that the molecular weight exceeds 5000. Preferably the high polymer has a melting point or melting zone above 180 °C, or most preferably above 190 °C. The high polymer is preferably selected from polyamids, polyurethanes or polyester based thermoplastic elastomers.
The thickness of the coating is preferably smaller than or equal to 0.15 mm.

## Brief description of the drawings.

The invention will now be described into more detail with reference to the accompanying drawings wherein

- FIGURE 1 shows a transversal cross-section of a first example of a bead assembly ;
- FIGURE 2 shows a detailed view of a transversal cross-section of an elongated element of a bead assembly ;
- FIGURE 3 shows a transversal cross-section of another example of a bead assembly and a detailed view of a transversal cross-section of an elongated element of this bead assembly ;
- FIGURE 4, FIGURE 5 and FIGURE 6 all show different geometrical cross-sectional configurations of bead assemblies.

## Description of the preferred embodiments of the invention.

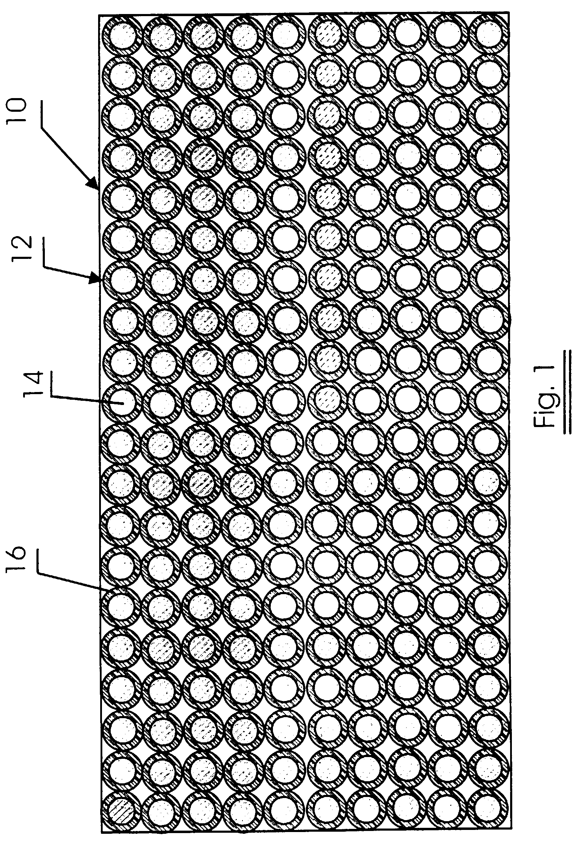

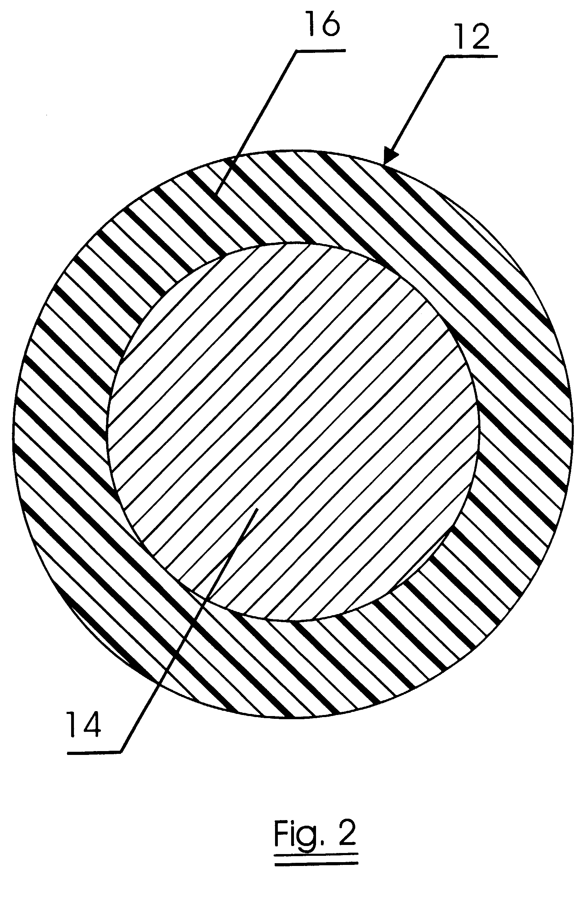

FIGURE 1 shows a transversal cross-section of a first example of a bead assembly 10 according to the invention. The bead assembly 10 comprises 220 windings of a single elongated element 12 : twenty windings one next to the other in a horizontal direction and forming one layer, and eleven layers of twenty windings, one layer above the other layer.
Such a single elongated element 12 is shown in detail in FIGURE 2.
The elongated element 12 comprises an ultra high-tensile steel filament with a diameter of 0.18 mm as core 14. The steel filament 14 has a coating 16 of a high polymer material. The global diameter of the elongated element 12 is 0.22 mm. The total length of the elongated element 12 in the bead assembly is about 267 m for an internal diameter of the bead assembly of 384 mm which fits for a passenger car tire with a rim diameter of 15 inch.

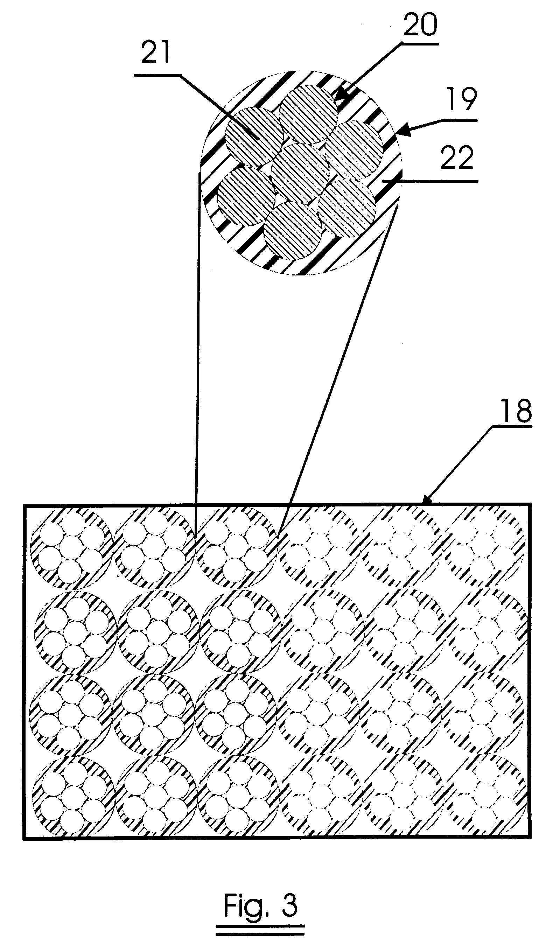

FIGURE 3 shows a transversal cross-section of a second example of a bead assembly 18 according to the invention. The bead assembly 18 comprises 24 windings of a single elongated element 19 : six windings one next to the other in a horizontal direction and forming one layer, four layers of six windings, one layer above the other layer.
The single elongated element 19 comprises a bundle 20 of seven individual filaments 21 and a coating 22 of a high polymer material around the bundle 20. The seven individual steel filaments 21 of the bundle 20 all have a diameter of 0.20 mm and all have an ultra high-tensile strength. The diameter of the non-coated bundle 20 is 0.60 mm (= 3x0.20 mm) and the diameter of the coated elongated element 19 is 0.64 mm. The breaking load of an individual steel filament is about 121 N.

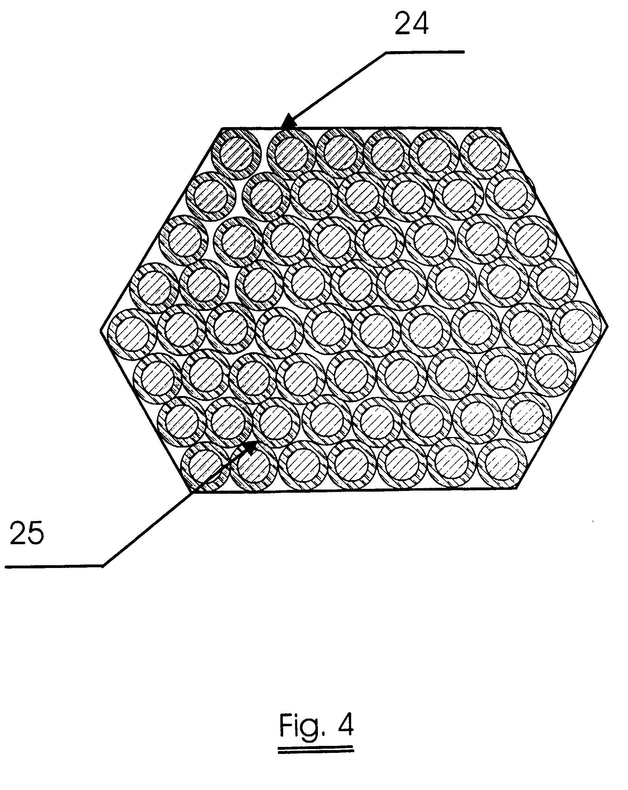

The bead assemblies of FIGURE 1 and FIGURE 3 have a rectangular transversal cross-section. The technique of winding a single elongated element comprising a steel core and a synthetic coating is, however, not limited to rectangular cross-sections. Other cross-sections are possible.
Some of these cross-sections are illustrated in FIGURE 4, FIGURE 5 and FIGURE 6.

FIGURE 4 shows a bead assembly 24 where the windings of the elongated element 25 form a hexagonal cross-section.

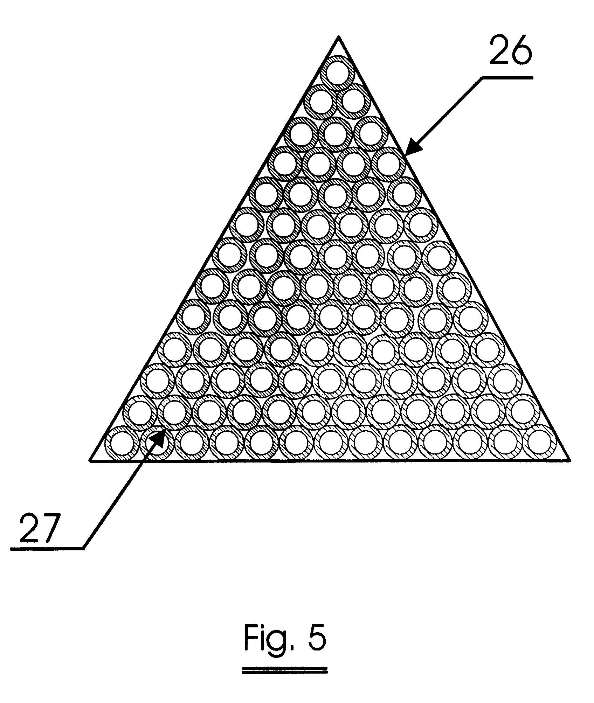

FIGURE 5 shows a bead assembly 26 where the windings of the elongated element 27 form a triangular cross-section.

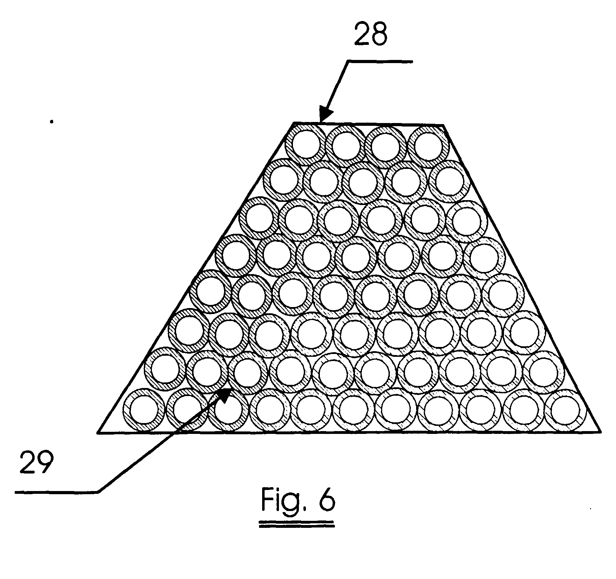

FIGURE 6 shows a bead assembly 28 where the windings of the elongated element 29 form a trapezium cross-section.

A bead assembly according to the invention has been compared with two existing bead assemblies with regard to weight and with regard to price. Table 1 hereunder summarizes the results.

Table 1

| Type of bead assembly | | | | |
|---|---|---|---|---|
| | number of windings | length of element (m) | weight (%) | price/bead (%) |
| 0.89 mm steel wire single element 1x16 | 16 | 19.5 | 100.0 Ref. | 100 Ref. |
| aramid filament 3360 dtex | 44 | 53.2 | 33.9 | ±750 |
| **invention : 1x216 0.18 mm ultra-high tensile steel core, coated to diameter of 0.22 mm** | **216** | **267** | **56.5** | **±150** |

The values of weight and price in the above Table 1 are relative values.

A tensile test has also be carried out on different bead assemblies. Table 2 hereunder summarizes the results.

Table 2

| Type of bead assembly | Breaking load bead (KN) | Reference elongation (%) | Coefficient C (%) |
|---|---|---|---|
| 1 | 34.1 | 3.35 | unknown |
| **invention 2** | **37.7** | **2.66** | **95** |
| 3 | 33.9 | 2.14 | 81 |
| 4 | 36.4 | 2.13 | 87 |
| 5 | 37.5 | 2.54 | 84 |
| 6 | 30.6 | 2.21 | 69 |
| 7 | 33.3 | 2.06 | 75 |
| 8 | 29.7 | 2.18 | 68 |

In the above Table 2, the numbers in the first column refer to following types of bead assemblies :

1 : Aramide composite bead 15 inch ;

2 : invention 1x216 bead assembly, 0.18 mm ultra high-tensile filament, coated with high polymer until diameter of 0.22 mm, 216 windings ;

3 : 0.89 mm steel wire ; 4x4 bead construction, thickness of layer 1.2 mm ;

4 : 0.89 mm steel wire ; 1x16 bead construction, diameter of extruded wire 1.1 mm ;

5 : 0.86 mm high-tensile steel wire ; 4x4 bead construction, stress relieved to obtain higher elongation, thickness of layer 1.2 mm ;

6 : 0.825 mm high-tensile steel wire ; 4x4 bead construction, not stress relieved, thickness of layer 1.2 mm ;

7 : 0.825 mm high-tensile steel wire ; 1x16 bead construction, not stress relieved, extruded diameter 1.03 mm ;

8 : 3x0.20+6x0.35 high-tensile cord ; 3x3+2 bead construction.

The "Reference Elongation" is the elongation at fracture of a bead which is uniformly elongated over the total bead circumference so that there are no local deformations.

The bead assembly according to the invention has the greatest value in Reference Elongation.

The "Coefficient" C is the measured breaking load $F_{Bm}$ divided by the theoretical breaking load. The theoretical breaking load is equal to twice the number n of wires per bead multiplied by the breaking load per wire $F_{BW}$. The Coefficient is expressed in per cent.

$$C = 100 \times F_{Bm} / 2 \times n \times F_{Bw} \ (\%)$$

The bead assembly according to the invention has also the greatest value in Coefficient.

Other advantages of the bead assembly according to the invention, in comparison with conventional beads are a better stress distribution over the cross-section of the bead due to the matrix material and due to the high number of windings, an improved efficiency, a better adaptability to the tire sizes, a higher uniformity and a reduced cross-sectional surface.

A steel composition used for the ultra high-tensile steel filaments is along following lines : a carbon content ranging from 0.85 % to 1.0 %, a silicon content ranging from 0.10 % to 1.0 %, a manganese content ranging from 0.10 % to 0.60 %, a chromium content ranging from 0.05 to 0.40 %, a maximum phosphorous content of 0.05 %, a maximum sulfur content of 0.05 %, the remainder being iron. As a matter of example, the carbon content is 0.92 %, the manganese content 0.30 %, the chromium content 0.20 %, and the silicon content 0.20 %.

The ultra high-tensile steel filaments may be coated with bronze, zinc, brass, copper or a particular coating may be absent. The type of coating mainly depends upon the type of matrix material to be provided around the steel filament. Preference is given to coatings that enable an easy manufacturing (e.g. brass, copper and bronze which facilitate the hard drawing steps) or to coatings that improve the adhesion between the steel filaments and the matrix material.

## Claims

1. A composite bead assembly (10) comprising a number of windings of a single elongated element (12),

   said element (12) comprising a steel core (14) and a coating of matrix material (16) around said core,
   said core comprising one or more steel filaments,
   characterized in that
   said steel filaments having a diameter d ranging from 0.10 mm to 0.60 mm and having a tensile strength more than 4000 - 2000 x d MPa, wherein d is the diameter expressed in mm.

2. An assembly according to claim 1,
   wherein said core is a bundle of steel filaments.

3. An assembly according to claim 2,
   wherein the number of windings exceeds 3.

4. An assembly according to claim 1,
   wherein said core is a single steel filament.

5. An assembly according to claim 4,
   wherein the number of windings exceeds 6.

6. An assembly according to claim 4,
   wherein the number of windings exceeds 100.

7. An assembly according to any one of the preceding claims,
   wherein said matrix material is rubber.

8. An assembly according to any one of claims 1 to 7,
   wherein said matrix material is a high polymer.

9. An assembly according to claim 8
   wherein said polymer has a melting point or melting zone lying above 190 °C.

10. An assembly according to any one of the preceding claims,
    wherein said coating has a thickness smaller than 0.15 mm.

Fig. 1

Fig. 2

Fig. 3

24

25

Fig. 4

Fig. 5

Fig. 6

**European Patent Office**

## EUROPEAN SEARCH REPORT

Application Number

EP 98 20 0611

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 751 015 A (SEDEPRO) 2 January 1997 | 1-3,7,10 | B60C15/04 |
| Y | * page 3, line 22 - line 51; claims; figures * | 4-6,8,9 | |
| | --- | | |
| Y | FR 2 591 154 A (GOODYEAR TIRE & RUBBER) 12 June 1987 | 4-6 | |
| A | * page 5, line 9 - line 14; claims; figures * | 7,10 | |
| | --- | | |
| Y | EP 0 252 395 A (MICHELIN & CIE) 13 January 1988 | 8,9 | |
| A | * the whole document * | 1-6 | |
| | --- | | |
| X | FR 1 413 465 A (THE NATIONAL STANDARD COMPANY) 31 December 1965 * the whole document * | 1,2,7 | |
| | --- | | |
| A | GB 2 092 629 A (BEKAERT SA NV) 18 August 1982 * page 1, line 1 - line 28; claims 1-3 * | 1,2,7 | |
| | --- | | TECHNICAL FIELDS SEARCHED (Int.Cl.6) |
| A | EP 0 489 159 A (NIPPON STEEL CORP) 10 June 1992 * page 1, line 48 - line 53 * * page 7, line 8 - line 14; claims * | 1 | B60C |
| | --- | | |
| A | EP 0 611 669 A (BEKAERT SA NV) 24 August 1994 * the whole document * | 1 | |
| | --- | | |
| A | EP 0 154 597 A (GOODYEAR TIRE & RUBBER) 11 September 1985 * the whole document * | 4-6 | |
| | ----- | | |

The present search report has been drawn up for all claims

| Place of search | Date of completion of the search | Examiner |
|---|---|---|
| THE HAGUE | 10 August 1998 | Labeeuw, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)